# EUROPEAN PATENT APPLICATION

(11) **EP 4 782 407 A1**
(43) Date of publication of application: **29.07.2026**
(21) Application number: 24868013.4
(22) Date of filing: 22.08.2024
(51) Int. Cl.: C02F 1/40

(54) **SCUM REMOVING DEVICE**

(30) Priority: 19.09.2023 JP 2023151070
(71) Applicant: Utsunomiya Kogyo Co., Ltd., Koto-ku Tokyo 136-0071 (JP)
(72) Inventor: UTSUNOMIYA, Hideo, Tokyo 136-0071 (JP)
(74) Representative: Plasseraud IP
(86) International application number: PCT/JP2024/029790
(87) International publication number: WO 2025/062933

(57) **Abstract**

To provide a scum removal device with which it is possible to reduce the load on the natural environment by improving the quality of treated water and to further contribute to energy saving and that can be easily applied to an existing sedimentation basin as well.

Provided is a scum removal device that removes scum at a position downstream of a sedimentation basin provided in a sewage treatment plant by causing the scum to flow into a scum intake unit that is provided to hold back flow of a surface of water, the device including a pair of guide plates that is disposed such that an interval between the guide plates increases toward a direction in which raw water flows toward the scum intake unit and a fluid jetting pipe that includes a plurality of opening portions provided at intervals in a length direction, and that jets, through the opening portions, fluids that rise from lower end portions of the pair of guide plates along surfaces of the pair of guide plates that are on a side from which the raw water flows, in which the pair of guide plates is provided such that an upper portion of each guide plate is positioned above the surface of the water and a lower portion of each guide plate is positioned in the water.

## Description

### Technical Field

The present invention relates to a scum removal device, and particularly to a scum removal device suitable to be used in a primary sedimentation basin installed in a sewage treatment plant. Priority is claimed on Japanese Patent Application No. 2023-151070, filed on September 19, 2023, the content of which is incorporated herein by reference.

### Background Art

In a sewage treatment plant, a primary sedimentation basin, which may be referred to as a first sedimentation basin and in which a settleable substance in raw water received into the sewage treatment plant is subjected to a sedimentation and separation process, is installed. The main purpose of the primary sedimentation basin is to cause the settleable substance to settle and to be separated but raw water received into the primary sedimentation basin also contains buoyant substances due to the characteristics of sewage. Therefore, the primary sedimentation basin is provided with a scum removal device that removes scum, which is formed by a collection of buoyant substances. An example of the scum removal device is described in PTL 1.

Removal of the scum that is performed by the scum removal device is performed by means of a scum intake unit that is provided downstream of the primary sedimentation basin and that is partially positioned in water. In a case where the scum intake unit is a pipe skimmer type, the scum intake unit is rotationally moved such that an opening provided in a pipe parallel to the surface of water is positioned slightly below the surface of water when a chance to remove the scum comes. Accordingly, surface water containing the scum flows into the pipe and the scum is removed.

In a case where the scum intake unit is a trough type, the scum intake unit is lowered such that the position of an upper end of an inflow weir is lower than the surface of water when a chance to remove the scum comes. Accordingly, the surface water containing the scum flows into the trough and the scum is removed.

Regardless of whether the scum intake unit is the pipe skimmer type or the trough type, there is a disadvantage in which the amount of water required for scum removal is considerably large and the cost of a treatment therefor is increased since the scum is accompanied by water flowing into the pipe or the trough. Therefore, the present applicant has previously proposed a scum removal device as in PTL 2 and has a lot of achievements related to the scum removal device according to the proposal. The scum removal device according to the proposal is known as "Shuichi-kun" (registered trademark).

The scum removal device according to the proposal is a pipe skimmer type and is configured to be provided with jetting means for jetting a fluid (air) upward in the vicinity of an opening portion of a pipe into which scum flows. Then, in a case where air is jetted from the jetting means at the time of discharge of scum, the scum is caused to be taken in and the scum flows into the pipe again and again. Once inflow of scum is started, the inflow of scum continues even in a case where the jetting of air is stopped.

The scum removal device according to the proposal has an excellent feature in which the quality of treated water can be improved in comparison with a scum removal device in the related art, the amount of water required for discharges of scum can be reduced to 1/20 to 1/30, and it is possible to contribute to energy saving.

### Citation List

### Patent Literature

[PTL 1] JP-A-H9-19682
[PTL 2] JP-A-2004-202493

### Summary of Invention

### Technical Problem

The present applicant has a lot of achievements of the scum removal device according to the above proposal, but there is a demand for the appearance of a scum removal device that can more efficiently remove scum. In addition, there is a demand for the appearance of a scum removal device that can be easily applied to a large number of existing sedimentation basins.

Therefore, the present invention has been made in order to meet the above-described demand, and an object of the present invention is to provide a scum removal device with which it is possible to reduce the load on the environment by improving the quality of treated water and to further contribute to energy saving and that can be easily applied to an existing sedimentation basin as well. Solution to Problem

In order to achieve the above-described object, according to the present invention, there is provided a scum removal device that removes scum at a position downstream of a sedimentation basin provided in a sewage treatment plant, the device including: a scum intake unit that is provided to hold back flow of a surface of raw water and into which the scum flows; a pair of guide plates that is provided upstream of the scum intake unit such that an upper portion of each guide plate is positioned above a surface of water and a lower portion of each guide plate is positioned in the water and that is disposed such that an interval between the guide plates increases toward an upstream side from which the raw water flows; and a first fluid jetting pipe that is provided near lower end portions of the guide plates, that includes a plurality of opening portions provided at intervals in a length direction, and that jets, through the opening portions, fluids that rise along surfaces of the guide plates that are on the upstream side.

It is possible to guide the scum flowing through the sedimentation basin to the scum intake unit while concentrating the scum to a central portion with the pair of guide plates. In such a case, it is possible to guide the scum in a state of being separated from the guide plates while preventing the scum from adhering to the guide plates by means of the fluids jetted from the first fluid jetting pipe provided near the lower end portions of the guide plates.

In addition, since the fluids are jetted from the first fluid jetting pipe, the scum to be taken into the scum intake unit can be guided to the scum intake unit while being lifted from a lower side.

Therefore, the amount of the remainder of the scum can be reduced, the scum can be smoothly and reliably taken into the scum intake unit, and the scum can be taken in in a short time. Therefore, the amount of water taken in together with the scum is also reduced. Water taken in together with the scum is returned to the upstream side after a treatment of the scum and the amount of the returned water is reduced. Therefore, the amount of electricity for removing the scum and returning the water can also be reduced. In addition, although treated water after scum removal is released into the natural environment, the load on the environment is reduced since the water quality of the treated water is improved.

The scum removal device of the present invention may further include a front wall plate that is provided below the scum intake unit along a direction orthogonal to a direction in which the raw water flows and a second fluid jetting pipe that is provided near a lower end portion of the front wall plate, that includes a plurality of opening portions provided at intervals in a length direction, and that jets, through the opening portions, fluids that rise along a surface of the front wall plate that is on the upstream side.

Since the front wall plate is provided, it is possible to hold back the flow at a position below the scum intake unit and to prevent the scum from flowing to a position downstream of the scum intake port so that the scum is reliably taken in.

In the scum removal device of the present invention, each of the second fluid jetting pipe and the first fluid jetting pipe may be connected to a fluid supply pipe via a flow rate adjustment valve.

The flow rates of the fluids jetted from the first and second fluid jetting pipes can be individually adjusted by means of each flow rate adjustment valve. Since the pair of guide plates is provided to protrude to position above the surface of water, the scum may adhere to the guide plates by being pushed by the flow. However, since a pressure fluid such as compression air is supplied from the first fluid jetting pipe provided at the lower end portions thereof, the scum can be prevented from adhering to surfaces of the guide plates so that the scum is separated from the surfaces of the guide plates and the scum can be effectively guided to the scum intake unit.

Regarding the front wall plate disposed below the scum intake unit, the pressure of the fluids jetted from the second fluid jetting pipe is set to be relatively small so that the scum can be guided to the scum intake port while being lifted from the lower side without being destroyed or the like.

In the scum removal device of the present invention, the scum intake unit includes a pipe material that is disposed to be parallel with the surface of water and that includes a scum intake port provided along a length direction at a portion of a peripheral wall, and a rotational movement mechanism that is able to rotationally move the pipe material such that the scum intake port is disposed at a scum intake position at which a portion of the scum intake port is in the water and a non-intake position at which the scum intake port is disposed above the water, and an upper end of the front wall plate is disposed at the same height as or below a lower end of the scum intake port that is at the scum intake position.

The scum on the surface of the water can be efficiently taken in through the scum intake port extending along the length direction of the horizontal pipe material, and the scum can be effectively removed in combination with the actions of the guide plates, the front wall plate, and the first and second fluid jetting pipes described above.

In the scum removal device of the present invention, the fluids jetted through the opening portions of the first and second fluid jetting pipes may be compression air. In this case, at the guide plates, a state where the scum is separated from the guide plates can be maintained because of a bubbling phenomenon. At the front wall plate, the scum can be effectively guided to the scum intake port by generating a buoyant force for the scum.

In the scum removal device of the present invention, the opening portions of the first fluid jetting pipe or the second fluid jetting pipe may be provided in cup-shaped discharge port members and be disposed to face a lower side.

In the scum removal device of the present invention, a plurality of water ejection nozzles that eject water to the scum generated on the surface of the water are provided upstream of the guide plates.

Since water is ejected from the water ejection nozzles to the scum that floats on the surface of the water and that is concentrated, air bubbles adhering to the scum are destroyed so that a settleable substance floating due to air bubbles can be caused to settle.

In addition, in a case where the scum is solidified on the surface of the water, the scum is destroyed to flow easily and the scum is pushed to flow to a downstream side as a whole, so that the scum can be discharged easily.

In the scum removal device of the present invention, a plurality of in-water nozzles that eject, from an inside of the water, pressure water that causes the scum generated on the surface of the water to flow to a downstream side are provided upstream of the guide plates.

Since the scum floating on the surface of the water is pushed to flow to the downstream side from a lower side in the water, the scum can be discharged easily. Advantageous Effects of Invention

Since the scum removal device of the present invention is configured such that the front wall plate and the pair of guide plates are provided ahead of the scum intake unit and a pressure fluid is jetted from each fluid jetting pipe, it is possible to remove scum in a shorter time and the amount of water accompanied by the scum is reduced, which can contribute to reduction or the like of the amount of power consumption. In addition, since the quality of treated water after scum removal is improved, it is possible to achieve a very excellent effect in which a load on the environment in a case where the treated water is released into the natural environment can be reduced. Furthermore, the pair of guide plates including the fluid jetting pipe, which is a main component, can be manufactured in advance at a factory and has a feature in which the pair of guide plates can be easily applied to an existing sedimentation basin as well.

### Brief Description of Drawings

Fig. 1 is a plan view partially showing a sedimentation basin including a scum removal device according to an embodiment of the present invention.
Fig. 2 is a cross-sectional view taken along line A-A of Fig. 1.
Fig. 3 is an enlarged view of the vicinity of a pipe skimmer in Fig. 2.
Fig. 4A is a cross-sectional view of a water ejection nozzle, and Fig. 4B is a plan view of the water ejection nozzle.

### Description of Embodiments

Hereinafter, a scum removal device 10 according to an embodiment of the present invention will be described.

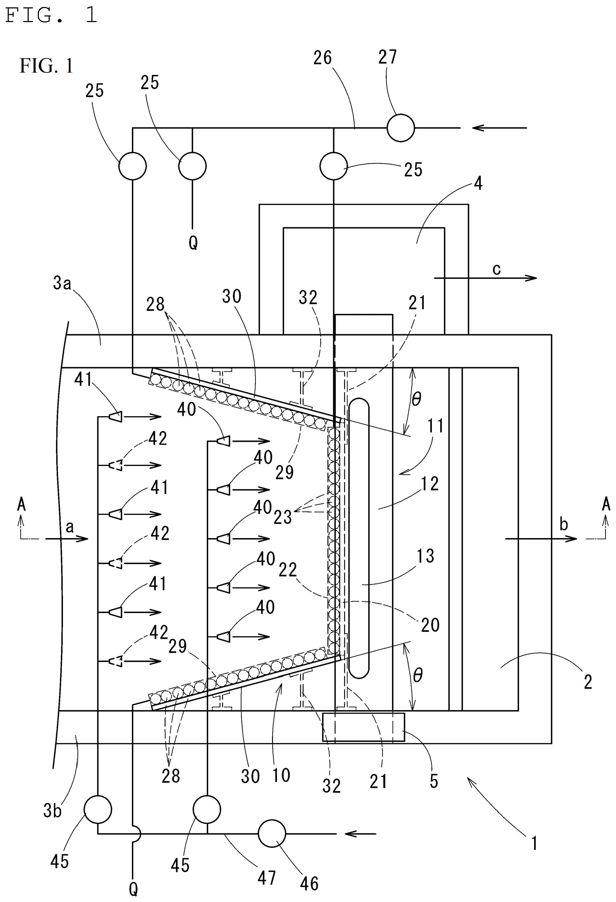

Fig. 1 is a plan view of a downstream-side portion of a sedimentation basin 1 including the scum removal device 10 according to the embodiment of the present invention. Here, the description will be made on an assumption that the sedimentation basin 1 is a primary sedimentation basin provided in a sewage treatment plant.

The sedimentation basin 1 is configured to receive, through a conduit (not shown), sewage (hereinafter, may be referred to as "raw water" which means water before water purification treatment) received into the sewage treatment plant. The sewage received into the sedimentation basin 1 moves from one side (the left side in an example shown in the drawing) of the sedimentation basin 1 to the other side (the right side in the example shown in the drawing). While the sewage is moving from the one side to the other side (that is, while the sewage is flowing as represented by an arrow a in the drawing), settleable substances contained in the sewage settle to be separated.

Although not shown, settleable substances (sludge) that settle at a bottom surface of the sedimentation basin 1 are concentrated into a pit provided at a bottom portion on the one side of the sedimentation basin 1 by a sludge scraping machine and then treated after being sent to a sludge treatment facility.

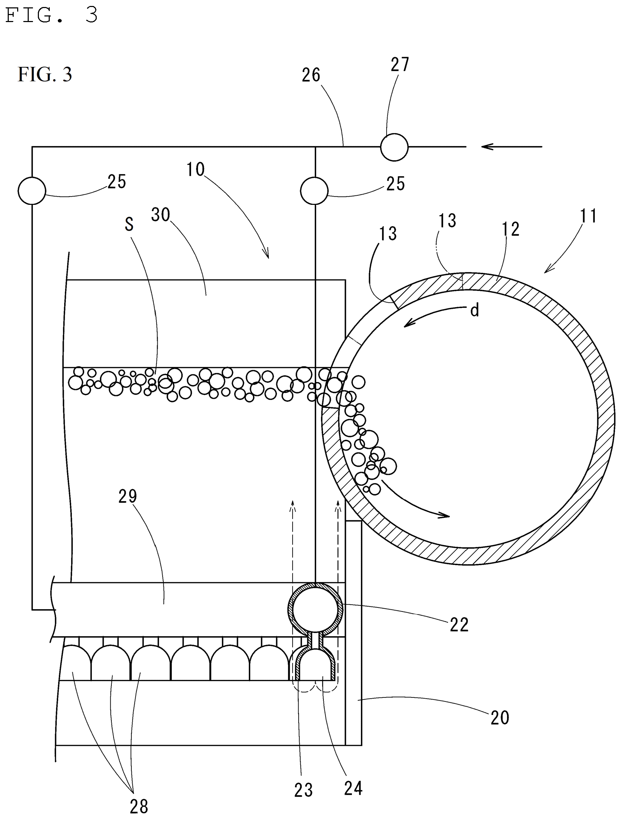

Raw water contains a buoyant substance in addition to a settleable substance and scum, which is a collection of buoyant substances, is generated on the surface of water in the sedimentation basin 1. Therefore, in the sedimentation basin 1, the settleable substances are separated as described above and the scum (refer to "S" in Fig. 3) is removed by the scum removal device 10.

Treated water obtained after removal of the settleable substances and scum S is received into an overflow trough 2 provided on the other side (the downstream side) of the sedimentation basin 1. The treated water received into the overflow trough 2 is extracted from the overflow trough 2 as represented by an arrow b in Fig. 1, sent to a reaction tank (an aeration tank) (not shown), and subjected to a biological treatment.

The scum removal device 10 is provided at a position upstream of the overflow trough 2 on a downstream side of flow of raw water in the sedimentation basin 1. In the scum removal device 10, a pipe skimmer 11 that corresponds to a scum intake unit of the present invention is provided.

The pipe skimmer 11 includes a pipe material 12 that is provided to hold back flow of the surface of water and a rotational movement mechanism 5 that rotationally moves the pipe material 12. That is, the pipe material 12 is provided horizontally to cross the sedimentation basin 1 in a width direction, and a peripheral wall thereof is provided with a slit-shaped opening (a scum intake port) 13 extending along a longitudinal direction.

One end side of the pipe material 12 in the longitudinal direction watertightly penetrates one side wall 3a of the sedimentation basin 1 and is supported by the one side wall 3a to be rotationally movable and the other end side of the pipe material 12 is supported by the other side wall 3b of the sedimentation basin 1 to be rotationally movable. An end portion of the pipe material 12 penetrating the side wall 3a is disposed in a scum pit 4 provided outside the side wall 3a.

The rotational movement mechanism 5 configured to include a motor is provided on an upper surface of the other side wall 3b of the sedimentation basin 1 at which the other end side of the pipe material 12 is provided. The rotational movement mechanism 5 is configured such that the pipe material 12 can rotationally move in a reciprocating manner around the axis thereof by a predetermined angle.

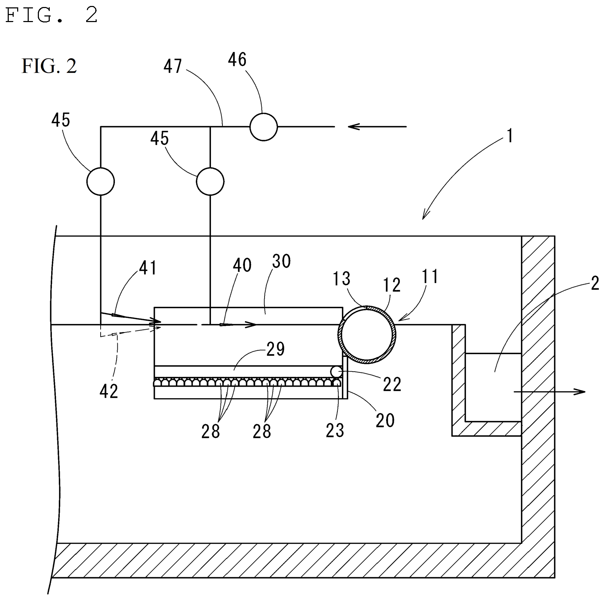

Normally, the pipe material 12 is supported such that the scum intake port 13 provided in the longitudinal direction is disposed above the surface of water as shown in Figs. 1 and 2. In a case where a time for removal of scum is reached, the rotational movement mechanism 5 rotates as represented by an arrow d in Fig. 3 (in a counterclockwise direction in Fig. 3) and is rotationally moved such that the surface of water is positioned at the substantially center of the width (the width along a circumferential direction of the pipe material 12) of the scum intake port 13.

Accordingly, the scum S ahead of the pipe material 12 flows toward the scum intake port 13 and after the scum S is dropped into the pipe material 12 through the scum intake port 13, the scum S is sent to the scum pit 4 through the inside of the pipe material 12. The position of the scum intake port 13 at this time will be referred to as a scum intake position and the position of the scum intake port 13 at which the scum intake port 13 is when the scum intake port 13 is disposed above the surface of water will be referred to as a non-intake position.

The scum discharged into the scum pit 4 is extracted from the scum pit 4 as represented by an arrow c, and is sent to a scum treatment facility including a dehydrator or the like (not shown) to be treated.

In addition, when the removal of the scum is finished, the pipe material 12 is rotationally moved in a direction (a clockwise direction in Fig. 3) opposite to a direction along the arrow d so that the scum intake port 13 is disposed to be positioned above the surface of water as shown in Fig. 1 (refer to two-dot chain lines in Fig. 3 as well). Such rotational movement control of the rotational movement mechanism 5 is performed by a programmable controller (not shown) that controls the entire sedimentation basin 1 including the scum removal device 10.

Note that the rotational movement mechanism 5 may be configured such that the pipe material 12 is manually rotationally moved in a reciprocating manner without a motor or the like.

In Fig. 1, the pipe material 12 is formed to have a length larger than the width of the sedimentation basin 1 and is disposed to cross the sedimentation basin 1. The scum intake port 13 provided in the longitudinal direction of the pipe material 12 is formed to have a length smaller than the width of the sedimentation basin 1, and both ends of the scum intake port 13 in the longitudinal direction are disposed to be separated from inner surfaces of both of the side walls 3a and 3b of the sedimentation basin 1 by predetermined distances.

The scum removal device 10 includes the pipe skimmer 11, a front wall plate 20, and a pair of guide plates 30. The front wall plate 20 and the guide plates 30 are provided on a side (the upstream side) ahead of the pipe material 12, that is, a side (a side that is to the left of the pipe material 12 in an example shown in the drawing) to which raw water flowing toward the pipe material 12 flows.

The front wall plate 20 is made of a steel plate material or a synthetic resin plate material, and has a rectangular shape that is elongated in the width direction of the sedimentation basin 1 as seen in the direction in which raw water flows (as seen from the upstream side). The length of a long side of the rectangular shape of the front wall plate 20 is determined to be slightly larger than the length of the scum intake port 13 provided in the pipe material 12.

A short side of the front wall plate 20 is parallel to a depth direction of the sedimentation basin 1. As shown in Fig. 3, the position of an upper end of the front wall plate 20 is determined such that the position is lower than a position at which a lower end portion of the scum intake port 13 is when the pipe material 12 is rotationally moved and a portion of the scum intake port 13 is in water (the scum intake position). The position of a lower end of the front wall plate 20 extends to a position below the position of a lower portion of the pipe material 12.

One end portion of the front wall plate 20 in a longitudinal direction (the width direction of the sedimentation basin 1) is fixed to the inner surface of the one side wall 3a of the sedimentation basin 1 by means of a support member 21, and the other end portion is fixed to the inner surface of the other side wall 3b of the sedimentation basin 1 by means of the support member 21. When both of the end portions are to be fixed, the end portions are carefully attached such that a rear surface (on the downstream side) of the front wall plate 20 (that is, a surface on a side opposite to a direction in which raw water flows) is brought close to the pipe material 12 to such a degree that the rear surface does not hinder rotational movement of the pipe material 12 and the position of an upper side of the front wall plate 20 is lower than the position of a lower end of the scum intake port 13 of the pipe material 12 that is at the scum intake position.

However, the upper side of the front wall plate 20 may be at the substantially same vertical position as the lower end of the scum intake port 13 of the pipe material 12 when the scum intake port 13 is at the scum intake position.

A second fluid jetting pipe 22 extending in the width direction of the sedimentation basin is provided near a lower side of a front surface (on the upstream side) of the front wall plate 20, that is, near a surface that is close to the lower side of the front wall plate 20 and is on a side to which a direction in which raw water flows extends, by means of a U-bolt or the like. The second fluid jetting pipe 22 is made of a steel pipe material or a synthetic resin pipe material, and a large number of discharge port members 23 are provided in a row at predetermined intervals in a length direction thereof.

Each of the discharge port members 23 is made of a synthetic resin such as fluororesin, and the outer shape thereof is a cup-like shape (a bowl-like shape, a hanging-bell-like shape, or the like) with an opening portion 24 provided at a lower portion thereof. Each of the discharge port members 23 is fixed to the second fluid jetting pipe 22 in a state where the inner space thereof communicates with the inside of the second fluid jetting pipe 22, and the opening portion 24 is disposed to face a vertically lower side.

One end side of the second fluid jetting pipe 22 in a longitudinal direction is closed, and the other end side thereof is connected to a flow rate control valve 25 via a fluid supply pipe 26. The fluid supply pipe 26 is provided with an opening and closing valve 27 such as a gate valve.

Although an example in which the front wall plate 20 is provided is shown in Figs. 1 to 3, the front wall plate 20 is not always necessary and the front wall plate 20 may not be provided. However, it is preferable that the front wall plate 20 is provided since provision of the front wall plate 20 results in a wall provided below the pipe skimmer 11.

Even in a case where the front wall plate 20 is not provided, the second fluid jetting pipe 22 including the discharge port members 23 is provided below the pipe skimmer 11 (a skimmer intake unit).

The paired guide plates 30 have the same shape as each other. The guide plates 30 are also made of a steel plate material or a synthetic resin plate material, similar to the front wall plate 20. In addition, the guide plates 30 have rectangular shapes, and the guide plates 30 are disposed in the sedimentation basin 1 such that short sides of the rectangular shapes are parallel to the depth direction. In this case, the width (a dimension along the depth direction of the sedimentation basin 1) of each guide plate 30 is approximately two times the length (a dimension along the depth direction of the sedimentation basin 1) of a short side of the front wall plate 20. The positions of upper sides and lower sides of both of the guide plates 30 are determined such that the positions of the upper sides are higher than the position of an upper surface of the scum S and the positions of the lower sides are substantially equal to the position of a lower side of the front wall plate 20 when the guide plates 30 are installed in the sedimentation basin 1 (refer to Figs. 2 and 3). Note that the guide plates 30 may not be provided.

First fluid jetting pipes 29 including a plurality of discharge port members 28 are attached near lower sides of front surfaces (on the upstream side) the guide plates 30, by means of U-bolts or the like. The first fluid jetting pipes 29 provided for both of the guide plates 30 are connected to the flow rate control valves 25 via the fluid supply pipe 26, as with the second fluid jetting pipe 22 of the front wall plate 20.

Note that, for the sake of convenience of illustration, the first fluid jetting pipe 29 on the side wall 3b side is shown up to an intermediate portion thereof and is connected to a pipe shown in an upper portion of the drawing at a position represented by a reference symbol "Q" in Fig. 1.

Although specific dimensions of the guide plates 30 in longitudinal directions will be described later, end portions of the guide plates 30, each of which is on one side (the downstream side) in each of the longitudinal directions, are fixed by means of support members 32 to respectively abut end portions (end portions on upper and lower sides in Fig. 1) of the front wall plate 20 and end portions of the guide plates 30, each of which is on the other side in each of the longitudinal directions, are fixed by means of support members 32 to respectively abut the inner surfaces of the side walls 3a and 3b of the sedimentation basin 1.

At the time of such fixation, attachment is carefully performed such that the positions of the respective upper sides of the guide plates 30 are higher than the position of the upper surface of the scum S and the positions of the lower sides are substantially equal to the position of the lower side of the front wall plate 20.

The length of each of the paired guide plates 30 is determined depending on an attachment angle θ at which the guide plates 30 are attached to the inner surfaces of both of the side walls 3a and 3b of the sedimentation basin 1. In an example of Fig. 1, the paired guide plates 30 are attached to the inner surfaces of both of the side walls 3a and 3b at an angle of approximately θ = 15° and are disposed such that an interval between the paired guide plates 30 gradually increases toward the upstream side.

The purpose of attaching the paired guide plates 30 at the attachment angle θ is to increase the concentration of the scum S and to obtain the scum S with a low water content by gradually concentrating, to a center portion side of flow, the scum S flowing toward the guide plates 30. It is also conceivable to decrease the lengths (dimensions along the width direction of the sedimentation basin 1) of the scum intake port 13 provided in the pipe material 12 and the front wall plate 20 to achieve an increase in concentration of the scum S. However, in a case where the attachment angle θ is large, the guide plates 30 increase the resistance against flow of the scum S. Therefore, the attachment angle θ is appropriately determined depending on the properties of raw water to be received into the sedimentation basin 1, the amount of the scum S generated, and the like.

Note that since each of guide plates 30 is provided with the first fluid jetting pipe 29 and water ejection nozzles (above-water nozzles) 40 and 41 which will be described later are provided between the guide plates 30, the attachment angle θ of the guide plates 30 can be made somewhat large.

Note that in a case where the attachment angle θ of the pair of guide plates 30 is made close to 0°, the pair of guide plates 30 is made almost parallel to both of the side walls 3a and 3b of the sedimentation basin 1. Therefore, although the effect of the guide plates 30 on concentrating the scum S is made smaller, the movement speed of the scum S is increased since the resistance against the scum S is reduced. In addition, since the first fluid jetting pipes 29 and the water ejection nozzles (above-water nozzles) 40 and 41 which will be described later are provided, a time taken for the scum S to be discharged is shortened and thus the amount of water for the discharge can be made small.

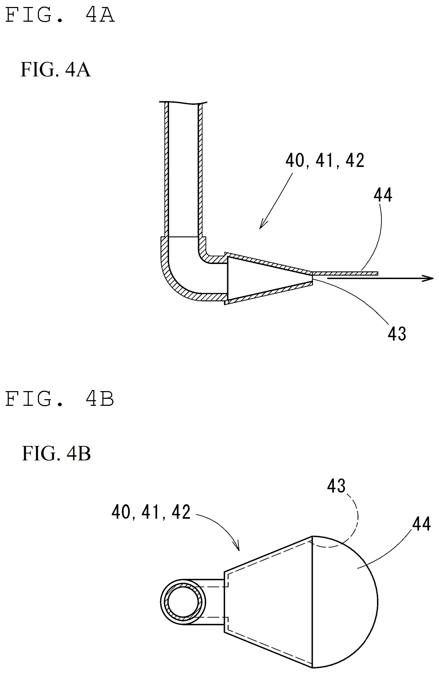

Near the surface of water in the vicinity of the scum removal device 10 configured to include the front wall plate 20 and the pair of guide plates 30 as described above, the water ejection nozzles (above-water nozzles) 40 and 41 shown in Figs. 4A and 4B are provided above the water and water ejection nozzles (in-water nozzles) 42 are provided in the water.

As shown in Fig. 1, a plurality of (five in the example shown in the drawing) the above-water nozzles 40 are provided at predetermined intervals in a direction across the sedimentation basin 1 in a region between the paired guide plates 30. As with the above-water nozzles 40, a plurality of (six in total in the example shown in the drawing) the above-water nozzles 41 and the in-water nozzles 42 are provided slightly upstream of the installation positions of the above-water nozzles 40 (in the example shown in the drawing, outside the region between the paired guide plates 30).

Each of the water ejection nozzles 40, 41, and 42 is configured to include a slit 43 through which water is jetted in a direction substantially parallel to a water surface direction and a rectification piece 44 that is provided to protrude from an upper portion of the slit 43 and that holds a layer-shaped water stream jetted from the slit 43. The water ejection nozzles 40 (above-water nozzles) disposed in the region between both of the guide plates 30 are provided at the substantially same position as the surface of water and are installed such that layer-shaped water streams jetted from the slits 43 thereof proceed toward the scum removal device 10 side (the pipe skimmer 11 side).

The above-water nozzles 41 and the in-water nozzles 42 are provided upstream of a region between both of the guide plates 30 and three above-water nozzles 41 that are positioned slightly above the surface of water and three in-water nozzles 42 that are positioned slightly below the surface of water are alternately disposed.

The above-water nozzles 41 are provided to be slightly inclined downward and sprinkle water toward the surface of water from an obliquely upper side. The in-water nozzles 42 are provided to be slightly inclined upward and eject water toward the surface of water from the inside of water. Note that in Figs. 1 and 2, the above-water nozzles 41 are represented by solid lines, and the in-water nozzles 42 are represented by broken lines. Note that, in the case of the primary sedimentation basin, the in-water nozzles 42 may not be provided.

The water ejection nozzles 40, 41, and 42 are configured such that the amount of ejection can be appropriately adjusted by means of flow rate adjustment valves 45 and the water ejection nozzles 40, 41, and 42 are connected to a water supply pipe 47 including an opening and closing valve 46.

Solid substances floating as scum include a solid substance that settles to be separated in a case where there is no air bubble adhering thereto. The water ejection nozzles 41 and 42 can destroy air bubbles and cause a solid substance to settle and to be separated by sprinkling water from above the scum S and ejecting water from the inside of water. Therefore, the number and the arrangement of the above-water nozzles 41 and the in-water nozzles 42 are determined depending on the properties or the like of the scum S on the surface of water.

An operation of removing the scum S in the sedimentation basin 1 including the scum removal device 10 configured as described above is performed as follows.

It will be assumed that there is a certain amount of the scum S retained on the surface of water and a time for scum discharge has been reached as shown in Fig. 3. When such a time is reached, the pipe material 12 of the pipe skimmer 11 rotationally moves such that the state thereof is changed from a state as shown in Figs. 1 and 2 to a state (the scum intake position) as shown in Fig. 3.

The opening and closing valves 27 and 46 are opened at the same time as the rotational movement of the pipe material 12 or before the rotational movement. Water is ejected to the scum layer S from the water ejection nozzles 40, 41, and 42 provided at upstream-side positions. Accordingly, air bubbles adhering to a solid substance of the scum layer S are destroyed, the solid substance floating due to the air bubbles settles and is separated, and the scum is pushed to flow to the downstream side along with the water ejected toward the downstream side.

Then, the scum layer S is pushed to flow toward the scum intake port 13 of the pipe skimmer 11 (the pipe material 12) through a space between the guide plates 30. At this time, at surfaces of the guide plates 30, compression air is jetted from the first fluid jetting pipes 29 as pressure fluids and a bubbling stream thereof reaches the surface of water. Accordingly, the scum layer S flows in a state of being separated from the surfaces of the guide plates 30 and is guided to the scum intake port 13 without adhering to the guide plates 30.

At a front surface of the front wall plate 20, compression air is relatively gently jetted from the second fluid jetting pipe 22 and a buoyant force thereof causes the scum layer S to flow to the scum intake port 13 while being lifted. In this manner, the scum S is caused to be taken into the scum intake port 13 and thereafter, the scum S continuously flows into the pipe skimmer 11 again and again. Once inflow of the scum S starts, air stops being jetted from the second fluid jetting pipe 22 of the front wall plate 20.

Since the jetting of compression air from the first fluid jetting pipes 29 near the guide plates 30 prevents adhesion of the scum to the guide plates 30 and prompts smooth flow to the scum intake port 13 by separating the scum from the surfaces of the guide plates 30, the jetting of the compression air is continuously performed even after the scum starts to be taken in.

Water streams jetted from the water ejection nozzles 40 disposed in the region between the guide plates 30 prompts flow of the scum S and thus the scum S can be quickly discharged to the pipe skimmer 11 (the pipe material 12).

The scum S taken into the pipe skimmer 11 (the pipe material 12) is discharged to the scum pit 4 and is sent to the scum treatment facility to be treated.

When most of the scum S is discharged into the pipe material 12, the pipe material 12 is rotationally moved to enter a state of being at the non-intake position shown in Fig. 1 and the opening and closing valves 27 and 46 are closed. Accordingly, compression air from the second fluid jetting pipe 22 and the first fluid jetting pipes 29 is stopped and ejection of water from the water ejection nozzles 40, 41, and 42 is stopped. Accordingly, a series of scum removal operations of the scum removal device 10 is finished.

Since the scum removal device 10 configured as described above is configured to include the front wall plate 20 including the second fluid jetting pipe 22, the pair of guide plates 30 including the first fluid jetting pipes 29, and the water ejection nozzles 40, 41, and 42, it is possible to discharge scum in a shorter time, the amount of water to be caused to flow into the pipe skimmer along with the scum is reduced, and it is possible to remove the scum in a short time. For example, it is possible to remove scum by operating the scum removal device 10 for approximately 7 to 10 minutes once a week. Accordingly, the amount of water returned to the upstream side from the pipe skimmer is also reduced. Therefore, the amount of electricity for removing the scum and returning the water can be reduced and energy saving can be achieved.

In addition, although treated water is released into the natural environment, a very excellent effect in which the load on the natural environment is reduced is achieved since the water quality of the treated water is improved. Therefore, the scum removal device 10 configured as described above has an excellent feature in which it is possible to further contribute to energy saving and to further considerably contribute to reduction of the load on the natural environment.

Furthermore, the scum removal device 10 configured as described above has a feature in which the front wall plate 20 and the pair of guide plates 30 including the second fluid jetting pipe 22 and the first fluid jetting pipes 29, which are main components, can be manufactured in advance at a factory and thus the scum removal device 10 can be easily applied to an existing sedimentation basin.

Note that in the above-described embodiment, the discharge port members 23 are provided at the second fluid jetting pipe 22 and the first fluid jetting pipes 29. However, a structure may be adopted in which the discharge port members 23 are not provided and small holes are formed in the fluid jetting pipes. However, in a case where the discharge port members 23 are provided, an upward stream of the compression air can be regulated. In addition, although the fluid jetted from the second fluid jetting pipe 22 and the first fluid jetting pipes 29 is compression air in the above-described embodiment, the same effect can be achieved even in a case where the fluid is a water stream or pressure water containing air bubbles.

In addition, although the scum intake unit is a pipe skimmer type in the above-described embodiment, the scum intake unit may be a trough type in which scum is taken in with an inflow weir moving vertically. In addition, although an example in which the scum removal device 10 is applied to a primary sedimentation basin has been described, the scum removal device 10 can also be applied to a final sedimentation basin. In this case, the water ejection nozzles 40 and 41 can be omitted in order to prevent pinflocculation (micronization) of scum.

Although the scum removal device according to the embodiment of the present invention has been described with reference to the drawings, the specific configuration is not limited to the above-described embodiment, and design changes and the like can be made without departing from the scope of the present invention.

### Industrial Applicability

It is possible to remove scum in a shorter time and the amount of water accompanied by the scum is reduced, which can contribute to reduction or the like of the amount of power consumption. In addition, since the quality of treated water after scum removal is improved, it is possible to achieve a very excellent effect in which a load the environment in a case where the treated water is released into the natural environment can be reduced. Furthermore, the present invention can be easily applied to an existing sedimentation basin.

### Reference Signs List

1: sedimentation basin (primary sedimentation basin)
2: overflow trough
3a, 3b: wall
4: scum pit
5: rotational movement mechanism
10: scum removal device
11: pipe skimmer (skimmer intake unit)
12: pipe material
13: opening (scum intake port)
20: front wall plate
21: support member
22: second fluid jetting pipe
23: discharge port member
24: opening portion
25: flow rate control valve
26: fluid supply pipe
27: opening and closing valve
28: discharge port member
29: first fluid jetting pipe
30: guide plate
32: support member
40: water ejection nozzle (above-water nozzle)
41: water ejection nozzle (above-water nozzle)
42: water ejection nozzle (in-water nozzle)
43: slit
44: rectification piece
45: flow rate adjustment valve
46: opening and closing valve
47: water supply pipe
S: scum

## Claims

1. A scum removal device that removes scum at a position downstream of a sedimentation basin provided in a sewage treatment plant, the device comprising:
a scum intake unit that is provided to hold back flow of a surface of raw water and into which the scum flows;
a pair of guide plates that is provided upstream of the scum intake unit such that an upper portion of each guide plate is positioned above a surface of water and a lower portion of each guide plate is positioned in the water and that is disposed such that an interval between the guide plates increases toward an upstream side from which the raw water flows; and
a first fluid jetting pipe that is provided near lower end portions of the guide plates, that includes a plurality of opening portions provided at intervals in a length direction, and that jets, through the opening portions, fluids that rise along surfaces of the guide plates that are on the upstream side.

2. The scum removal device according to Claim 1, further comprising:
a front wall plate that is provided below the scum intake unit along a direction orthogonal to a direction in which the raw water flows; and
a second fluid jetting pipe that is provided near a lower end portion of the front wall plate, that includes a plurality of opening portions provided at intervals in a length direction, and that jets, through the opening portions, fluids that rise along a surface of the front wall plate that is on the upstream side.

3. The scum removal device according to Claim 2,
wherein each of the second fluid jetting pipe and the first fluid jetting pipe is connected to a fluid supply pipe via a flow rate adjustment valve.

4. The scum removal device according to Claim 2,
wherein the scum intake unit includes
a pipe material that is disposed to be parallel with the surface of water and that includes a scum intake port provided along a length direction at a portion of a peripheral wall, and
a rotational movement mechanism that is able to rotationally move the pipe material such that the scum intake port is disposed at a scum intake position at which a portion of the scum intake port is in the water and a non-intake position at which the scum intake port is disposed above the water, and
an upper end of the front wall plate is disposed at the same height as or below a lower end of the scum intake port that is at the scum intake position.

5. The scum removal device according to Claim 1,
wherein the fluids jetted through the opening portions of the first fluid jetting pipe are compression air.

6. The scum removal device according to Claim 2,
wherein the fluids jetted through the opening portions of the second fluid jetting pipe are compression air.

7. The scum removal device according to Claim 1,
wherein a plurality of water ejection nozzles that eject water to the scum generated on the surface of the water are provided upstream of the guide plates.

8. The scum removal device according to Claim 1,
wherein a plurality of in-water nozzles that eject, from an inside of the water, pressure water that causes the scum generated on the surface of the water to flow to a downstream side are provided upstream of the guide plates.

9. The scum removal device according to Claim 1,
wherein the opening portions of the first fluid jetting pipe are provided in cup-shaped discharge port members and are disposed to face a lower side.

10. The scum removal device according to Claim 2,
wherein the opening portions of the second fluid jetting pipe are provided in cup-shaped discharge port members and are disposed to face a lower side.
